# EUROPEAN PATENT SPECIFICATION

(11) **EP 4 433 798 B1**
(45) Date of publication and mention of the grant of the patent: **10.09.2025**
(21) Application number: 22823620.4
(22) Date of filing: 18.11.2022
(51) Int. Cl.: G01N 1/36

(54) **EQUIPMENT FOR PROCESSING BIOLOGICAL SAMPLES**
VORRICHTUNG ZUR VERARBEITUNG BIOLOGISCHER PROBEN
ÉQUIPEMENT DE TRAITEMENT D'ÉCHANTILLONS BIOLOGIQUES

(30) Priority: 19.11.2021 IT 202100029357
(43) Date of publication of application: 25.09.2024
(73) Proprietor: Expertmed S.r.L., 37137 Verona (IT)
(72) Inventor: SGARBI, Massimo, 37137 Verona (VR) (IT); ROSATI, Giulio, 35122 Padova (PD) (IT); GHIOTTI, Andrea, 35122 Padova (PD) (IT)
(74) Representative: Zoli, Filippo
(86) International application number: PCT/IB2022/061129
(87) International publication number: WO 2023/089546

(56) References cited:
- EP-A1- 3 040 704
- EP-A2- 1 321 757
- US-A- 6 017 476
- US-A1- 2015 160 104

## Description

### Technical Field

The present invention relates to a piece of equipment and method for processing biological samples.

### Background Art

For a tissue to be analyzable through an optical microscope, it must be cut into very thin sections so that light can pass through it.

To obtain such sections, devices called microtomes are used, with which sections less than 10µm thick can be made.

In order to be able to dissect the tissues, these must undergo a treatment that involves fixing the material in a bath of buffered formalin and other fixative liquids and then embedding it in paraffin so as to increase the texture of the sample and consequently to facilitate obtaining thin and homogeneous sections.

The fixation process of the sample to be analyzed is carried out by means of the use of special boxes comprising a body that defines a containment chamber for the biological sample that is open at the top and provided with a removable closing lid. Both the body and the lid have a plurality of through openings adapted to allow for the passage of formalin and fixative liquids through the containment chamber of the biological sample.

Once the tissue has undergone the fixation process, it is placed outside the box and inside a supporting element adapted to contain it.

To this end, it is common practice to divide the paraffin dispensing into two phases, that is, to provide a first paraffin pouring to partly cover the sample and necessary for the anatomical piece to be correctly oriented and thus to obtain the maximum result during microtome cutting, and a second paraffin pouring, carried out after the first dose has cooled, to complete the filling of the box. Generally, after the first paraffin pouring, the box is placed in the refrigerator to allow the paraffin to cool and fix the tissue.

To speed up the paraffin solidification process, even after the second pouring, the supporting element and the relevant box can be arranged inside a freezer, from which they are then taken out at the end of a predefined period of time.

This practice results in the lengthening of time and weakening of the final paraffin block, with the risk, if not done correctly, of the appearance of a fracture where the separation surface is located between the first and the second pouring, which would render the sample totally unusable.

Once the paraffin has solidified, the box with the paraffin-wrapped tissue attached is placed on the microtome, which cuts the tissue according to the desired thickness. The cut is made starting from the outer surface of the paraffin block, that is, the one facing the supporting element. It is therefore preferable that the biological sample be located, within the paraffin block, as close as possible to the supporting element, so that already the first sections that can be obtained from the paraffin block contain traces of the sample itself.

Since paraffin tends to wrap not only the tissue arranged outside the box but also the box itself, it is necessary to remove the excess paraffin arranged around its perimeter edges before placing the box on the microtome. Excess paraffin that goes around the box may in fact cause a difficult or incorrect placement of the same on the microtome and, consequently, an incorrect cut of the biological sample.

This removal is done manually by the operators using blades making this operation particularly risky.

In addition, there may be a need to make new cuts of the biological sample (which is stored over time) even years later.

The conformation of the boxes known to date does not allow for repeatable positioning of the same on the microtome over time. Since the microtome performs the cutting of the biological sample according to a predefined inclination, in case the orientation of the box on the microtome changes over time, the biological sample will be cut at a different inclination than the previous one. This may result in the inability to obtain sections of the biological sample that can be used for subsequent analysis, particularly in the case of small biological samples, since the first cuts made by the microtome at a different inclination than the first sampling will substantially have the effect of "trimming" the sample itself, resulting in the loss of biological tissue.

To date, the operation of placing the box on the microtome is carried out manually by an operator, thus being difficult both in terms of the time required to perform it and economically as it requires the constant presence of an operator.

Not least, the introduction of the paraffin inside the supporting element that houses the box generates a force on the latter that pushes it out of the supporting element itself, thus causing a kind of "floating effect", which requires the constant presence of an operator to keep the box in the correct position.

Similarly, a similar force is generated by the liquid paraffin on the sample itself, which is pushed upwards moving it away from the relevant seat obtained on the supporting element, which makes the microtome cutting process longer since numerous sections have to be removed from the paraffin block before one containing traces of the biological sample is found. In order to avoid this misplacement of the sample, during the paraffin introduction phase, the operator is forced to hold the sample in place on the bottom of the supporting element, until the paraffin solidification process has reached a point that ensures that the sample can no longer move.

It is easy to appreciate that this process requires numerous phases, long execution times and the risk of rendering the sample unusable, all of which therefore inevitably go to affect the related costs.

An equipment for processing biological samples is known by US 2015/160104 A1.

### Description of the Invention

The main aim of the present invention is to devise a piece of equipment for processing biological samples which allow reducing the time and cost required to prepare a biological sample for subsequent analysis, as well as to eliminate the risk of breakage of the paraffin block made to support the sample.

Within this aim, one object of the present invention is to simplify and automate the various phases of the biological sample processing, with particular reference to the paraffin embedding phase.

Another object of the present invention is to significantly reduce, compared with the state of the art, the risk of paraffin going undesirably around the device itself, so as to speed up and economize the subsequent processing phases.

Yet another object of the present invention is to devise a piece of equipment which allows minimizing unwanted paraffin waste.

Yet another object of the present invention is to devise a piece of equipment which allows the biological sample to be fixed in the proximity of the bottom wall of the supporting element, extremely quickly and with minimal paraffin input.

Another object of the present invention is to devise a piece of equipment for processing biological samples that can overcome the aforementioned drawbacks of the prior art within the framework of a simple, rational, easy and effective to use as well as low cost solution.

The aforementioned objects are achieved by this equipment according to claim 1.

### Brief Description of the Drawings

Other characteristics and advantages of the present invention will become more apparent from the description of a preferred, but not exclusive, embodiment of the piece of equipment for processing biological samples, illustrated by way of an indicative, yet non-limiting example, in the accompanying tables of drawings in which:
Figure 1 is a schematic axonometric representation of a piece of equipment according to the invention;

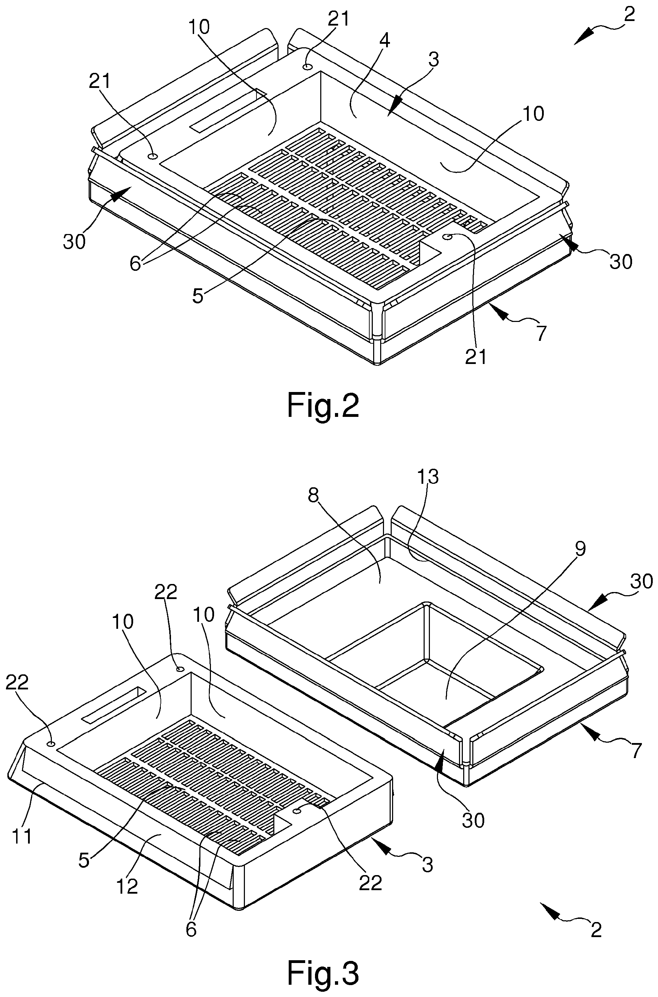

Figure 2 is an axonometric view of a device for processing biological samples;
Figure 3 is an exploded view of the device in Figure 2.

### Embodiments of the Invention

With particular reference to this figure, reference numeral 1 globally denotes a piece of equipment for processing biological samples.

The equipment 1 comprises a processing device 2 for processing biological samples comprising in turn at least one box 3, defining at least one open containment chamber 4 and having a bottom wall 5 provided with a plurality of through openings 6, and at least one supporting element 7, defining at least one housing seat 8 of the box 3.

The housing seat 8 has at least one recess 9 intended to receive a sample C of biological tissue and arranged, in use, facing the bottom wall 5.

Conveniently, the box 3 comprises a plurality of side walls 10 extending from the bottom wall 5 so as to define a closed profile, wherein at least one pair of side walls 10 arranged opposite each other has at least one relevant niche 11 facing outwards and defines at least one relevant abutment surface 12. The supporting element 7 in turn has at least one pair of shaped portions 13 adapted to fit within the niches 11 as a result of the introduction of the box 3 into the housing seat 8. The supporting element 7 also comprises at least one pair of retaining elements 30, each of which is adapted to interact with a relevant abutment surface 12 following the fitting of the shaped portions 13 into the relevant niches 11, so as to counteract the exit of the box 3 from the housing seat 8. More particularly, the box 3 and the supporting element 7 are made according to the teachings contained in the patent application co-deposited by the owner itself.

The piece of equipment 1 then comprises at least one filling station 14 of the recess 9 provided with at least one dispensing device 15 of fluid paraffin.

According to the invention, the piece of equipment 1 also comprises at least one fixing station 16 of the biological sample C, separate from the filling station 14 and comprising at least one drip device 17 adapted to release fluid paraffin in droplet form inside the recess 9.

Preferably, the piece of equipment 1 comprises at least one holding surface 18 of the processing device 2, which is movable by shifting along a direction of forward movement 19, wherein the filling station 14 is arranged downstream of the fixing station 16 along the direction of forward movement 19. The holding surface 18 is, e.g., of the type of a conveyor belt. Regardless of the presence or absence of the holding surface 18, the filling station 14 is still arranged downstream of the fixing station 16 with respect to the path to be taken by the processing device 2 and which coincides with the direction of forward movement 19.

The drip device 17 is, e.g., of the type of a heat gun or another similar device adapted to dispense a controlled amount of paraffin.

Advantageously, the dispensing device 15 and the drip device 17 are arranged in a fluid-operated communication with each other.

More particularly, the dispensing device 15 comprises a passage channel 15a of the fluid paraffin provided with at least one outlet port 15b facing outwards and the drip device 17 comprises a drip channel 17a of the fluid paraffin provided with at least one outlet port 17b facing outwards, wherein the drip channel 17a is communicating, e.g. by means of a paraffin collection tank V, with the passage channel 15a. The outlet port 15b and outlet port 17b are then arranged in succession with each other along the direction of forward movement 19, with the outlet port 15b positioned downstream of the outlet port 17b.

Depending on the embodiment, the sample C may be fitted inside the recess 9 before or after the drip device 17 has dispensed the relevant amount of paraffin. More particularly, a first embodiment involves placing the sample C inside the recess 9 only after the drip device 17 has dispensed the relevant amount of paraffin, so that the sample itself is placed on the paraffin thus dispensed. A second alternative embodiment, on the other hand, involves first fitting the sample C inside the recess 9, positioning it at the bottom of the same, and then having the drip device 17 dispense the paraffin so as to block the position of the sample C inside the recess itself.

Preferably, the fixing station 16 comprises cooling means of the supporting element 7.

In more detail, the fixing station 16 comprises at least one resting surface 20 of the supporting element 7 and the cooling means, not visible in detail in the figures, are associated with the resting surface 20. The resting surface 20 is then raised to a temperature substantially comprised between -5°C and -15°C, preferably about -10°C, so as to cause rapid solidification of the fluid paraffin dispensed by the drip device 17, consequently blocking the position of the sample C within the recess 9. The resting surface 20 may coincide with or be separate from the holding surface 18.

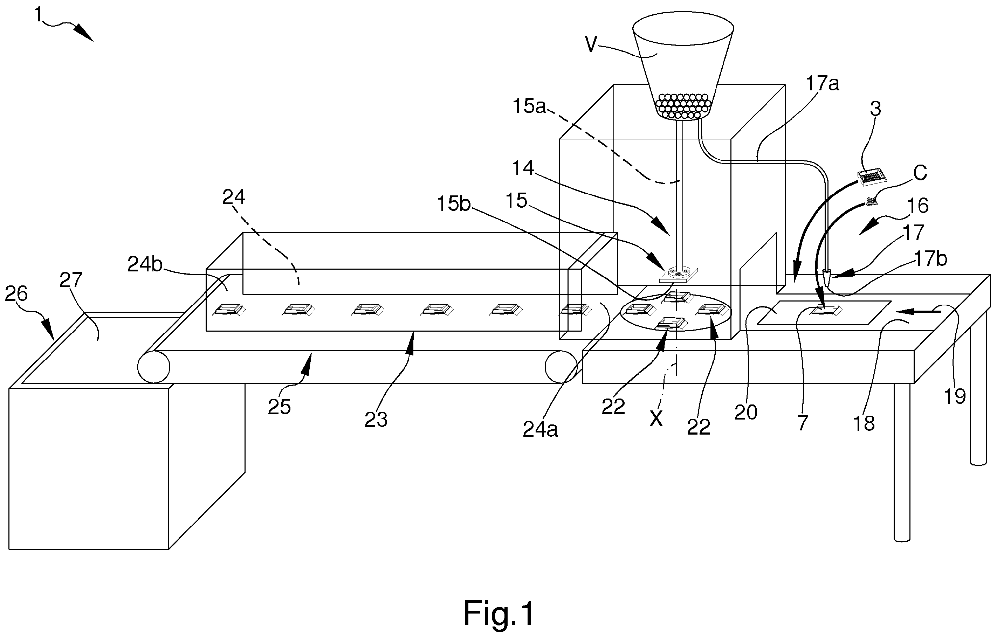

In the preferred embodiment of Figure 1, the dispensing device 15 is adapted to dispense by gravity the fluid paraffin and is movable between a home position, wherein it is spaced apart from the box 3, and a dispensing position, wherein it is placed resting on the box 3 with the outlet port 15b facing the containment chamber 4.

Advantageously, in this embodiment, the box 3 comprises one or more abutment elements 21 and the dispensing device 15 comprises one or more gripping elements (not visible in detail in the figures), each of which is adapted to engage, in the dispensing position, with a relevant abutment element 21 for the centering of the box itself with respect to the dispensing device.

In an alternative embodiment, not shown in the figures, the dispensing device 15 may have a nozzle adapted to dispense the fluid paraffin under pressure.

Preferably, the filling station 14 comprises a plurality of predefined receiving areas 22, intended to receive relevant processing devices 2, and rotational means for rotating the receiving areas 22 around an axis X so as to position the receiving areas themselves in succession at the outlet port 15b. In other words, the filling station 14 comprises a kind of rotating "carousel" supporting the receiving areas 22 on which the processing devices 2 are placed. More particularly, the outlet port 15b of the dispensing device 15 is offset from the axis X.

Alternative embodiments cannot be ruled out wherein the processing devices 2 are brought in succession, due to the forward movement of the holding surface 18, at the outlet port 15b of the dispensing device 15.

Appropriately, the piece of equipment 1 also comprises a consolidation station 23 of the paraffin dispensed by the dispensing device 15.

More particularly, the consolidation station 23 is arranged downstream of the filling station 14 with respect to the direction of forward movement 19.

In the preferred embodiment shown in the figures, the consolidation station 23 comprises at least one cooling chamber 24 of the processing device 2.

The cooling chamber 24 is placed at a temperature substantially comprised between -5°C and -15°C.

Advantageously, the cooling chamber 24 comprises at least one inlet opening 24a and one outlet opening 24b of the processing device 2 and the consolidation station 23 is additionally provided with movement means 25 of the processing device itself from the inlet opening 24a to the outlet opening 24b. In other words, the cooling chamber 24 is substantially tunnel-like in shape and the movement means 25 are of the type of a belt operable by shifting to move the processing device 2 through the cooling chamber itself. The extent of the cooling chamber 24 is appropriately sized depending on the speed of forward movement of the movement means 25 and the time required for the paraffin to solidify.

The movement means 25 can coincide with the holding surface 18.

Preferably, the piece of equipment 1 also comprises a collection station 26 of the processing devices 2 arranged downstream of the consolidation station 23 along the direction of forward movement 19.

In more detail, the collection station 26 comprises a collection tank 27 arranged downstream of the outlet opening 24b, at an equal or lower height than the movement means 25.

Advantageously, the collection tank 27 is maintained at a temperature of between -15°C and -25°C, preferably about -20°C.

The operation of the piece of equipment described in the execution of the method according to the invention is as follows.

The method covered by the present invention first comprises the supply of at least one sample C for analysis, such as e.g. a portion of human tissue, and at least one processing device 2 of the biological samples.

Next, the sample C is placed inside the recess 9, the box 3 is inserted inside the housing seat 8 and the fluid paraffin is poured inside the recess 9, through the through openings 6 so that the sample C is included.

According to the invention, a controlled amount of fluid paraffin is applied inside the recess 9 before placing the sample C inside the recess itself or, alternatively, after its placement but before pouring the fluid paraffin, so as to block the position of the sample C inside the recess 9.

More particularly, in the case where the application of the controlled amount of paraffin takes place prior to the placement of the sample C, once the paraffin so applied solidifies, the sample results blocked inside the recess. Similarly, in the case where the sample C is placed first, once the amount of paraffin dispensed above it solidifies, the sample results blocked inside the recess.

The term "controlled amount" means that the paraffin is dispensed in droplet form, i.e., in the minimum amount necessary to allow the sample C to be fixed within the recess 9.

Therefore, the application of the controlled amount of paraffin is done by means of the drip device 17.

Advantageously, a cooling phase is then carried out on the controlled amount of paraffin dispensed within the recess 9.

More particularly, this cooling phase is carried out at the same time or immediately after the placement of the sample C on the controlled amount of paraffin, so that its position inside the recess 9 is fixed.

In the embodiment of the equipment 1 shown in Figure 1, the cooling of the controlled amount of paraffin is carried out by means of the cooling means associated with the resting surface 20 of the processing device 2. In other words, the supporting element 7 is placed in contact with the resting surface 20, which is at a temperature of about -10°C, thus allowing the controlled amount of paraffin dispensed within the recess 9 to solidify rapidly.

Next, the box 3 is fitted inside the housing seat 8 and the fluid paraffin is poured into the recess 9, passing through the through openings 6, so that the sample C is included.

Once the box 3 has been fitted in the relevant supporting element 7, the processing device 2 thus made up, is moved from the fixing station 16 to the filling station 14. The displacement of the processing device 2 from the fixing station 16 to the filling station 14 can be done either manually or in an automated manner.

Preferably, paraffin pouring is carried out by gravity.

Pouring of the fluid paraffin in the recess 9 is carried out by means of the dispensing device 15.

Specifically, once the processing device 2 has arrived where the outlet port 15b is located, the dispensing device 15 dispenses a predefined amount of paraffin in the containment chamber 4.

In the embodiment shown in Figure 1, as a result of the application of the controlled amount of paraffin in the recess 9, of the positioning of the sample C and of the fitting of the box 3 in the relevant housing seat 8, the processing device 2 is brought, e.g., by movement of the holding surface 18, to the filling station 14, where it is positioned inside a relevant predefined receiving area 22. As a result of the rotation around the axis X, the receiving areas 22 are brought in succession to the point where the outlet port 15b of the dispensing device 15 is located.

At the moment when the processing device 2 is found to be aligned inferiorly with the outlet port 15b, the dispensing device 15 is moved from the home position to the dispensing position. More particularly, the dispensing device 15 is moved vertically downwards so that it is arranged to rest on the box 3, by intercepting the relevant abutment elements 21. In this way, the box 3 is centered with respect to the dispensing device 15 and the paraffin pouring operation is repeatable over time.

Once the pouring phase is completed, the processing device 2 is removed from the relevant receiving area 22.

At this point the paraffin solidification phase takes place.

Appropriately, this phase is carried out at a temperature of between -5°C and - 15°C. Specifically, the processing device 2 is made to pass through the cooling chamber 24.

The processing devices 2 are finally collected inside the collection tank 27.

Once the paraffin has solidified by including the sample C, the box 3 can be removed from the relevant supporting element 7 so that the subsequent analysis of the biological sample itself can be carried out.

It has, in practice, been ascertained that the described invention achieves the intended objects and, in particular, the fact is emphasized that the presence of a fixing station, separate from the filling station in charge of dispensing the paraffin for the inclusion of the biological sample, makes it possible to speed up the subsequent processing phases since the biological sample is already fixed in the ideal position within the relevant recess.

Specifically, the equipment and the method covered by the present invention enable the position of the biological sample to be fixed within the relevant recess by using the smallest amount of paraffin, so as to allow it to solidify rapidly and, at the same time, facilitate the subsequent inclusion operation because the sample remains stationary during paraffin pouring.

Again, the paraffin block is made in this way substantially in a single pouring, thus avoiding the cracking and possible breaking that occur in the processes used to date.

In addition, the use of a cooling chamber conformed to a tunnel shape facilitates and speeds up the solidification of the paraffin dispensed at the filling station, thus reducing the waiting time required to be able to give rise to subsequent analysis.

## Claims

1. Equipment (1) for processing biological samples comprising:
- a processing device (2) of biological samples comprising at least one box (3) defining at least one open containment chamber (4) and having a bottom wall (5) provided with a plurality of through openings (6), and at least one supporting element (7) defining at least one housing seat (8) of said box (3), wherein said housing seat (8) has at least one recess (9) intended to receive a biological tissue sample and arranged, in use, facing said bottom wall (5);
- at least one filling station (14) of said recess (9) comprising at least one dispensing device (15) of fluid paraffin;
**characterized by** the fact that it comprises at least one fixing station (16) of the biological sample separate from said filling station (14) and comprising at least one drip device (17) adapted to release fluid paraffin in droplet form inside said recess (9)
and by the fact that said dispensing device (15) comprises a passage channel (15a) of the fluid paraffin provided with at least one outlet port (15b) facing outwards and by the fact that said drip device (17) comprises a drip channel (17a) of the fluid paraffin provided with at least one outlet port (17b) facing outwards, wherein said drip channel (17a) is communicating with said passage channel (15a).

2. Equipment (1) according to claim 1, **characterized by** the fact that said fixing station (16) comprises cooling means of said supporting element (7).

3. Equipment (1) according to claim 2, **characterized by** the fact that said fixing station (16) comprises at least one resting surface (20) of said supporting element (7) and by the fact that said cooling means are associated with said resting surface (20).

4. Equipment (1) according to one or more of the preceding claims, **characterized by** the fact that said dispensing device (15) is movable between a home position, wherein it is spaced apart from said box (3), and a dispensing position, wherein it is placed resting on said box (3) with said outlet port (15b) facing said containment chamber (4).

5. Equipment (1) according to claim 4, **characterized by** the fact that said box (3) comprises at least one abutment element (21) and by the fact that said dispensing device (15) comprises at least one gripping element adapted to engage with said abutment element (21) in said dispensing position for the centering of said box (3) with respect to the dispensing device itself.

6. Equipment (1) according to one or more of the preceding claims, **characterized by** the fact that said filling station (14) comprises a plurality of predefined receiving areas (22) intended to receive relevant processing devices (2), and rotational means for rotating said receiving areas (22) around an axis (X) so as to position said receiving areas (22) in succession at said outlet port (15b).

7. Equipment (1) according to one or more of the preceding claims, **characterized by** the fact that it comprises at least one holding surface (18) of said processing device (2) movable by shifting along a direction of forward movement (19), said filling station (14) being arranged downstream of said fixing station (16) along said direction of forward movement (19).

8. Equipment (1) according to one or more of the preceding claims, **characterized by** the fact that it comprises a consolidation station (23) of the paraffin dispensed by said dispensing device (15).

9. Equipment (1) according to claim 8, **characterized by** the fact that said consolidation station (23) comprises at least one cooling chamber (24) of said processing device (2).

10. Equipment (1) according to claim 9, **characterized by** the fact that said cooling chamber (24) comprises at least one inlet opening (24a) and one outlet opening (24b) of said processing device (2), and by the fact that said consolidation station (23) comprises movement means (25) of said processing device (2) from said inlet opening (24a) to said outlet opening (24b).

11. Equipment (1) according to claim 10, **characterized by** the fact that said consolidation station (23) is arranged downstream of said filling station (14) along said direction of forward movement (19).

## Patentansprüche

1. Ausrüstung (1) zur Verarbeitung biologischer Proben, umfassend:
- eine Vorrichtung (2) zur Verarbeitung biologischer Proben, die mindestens einen Kasten (3) umfasst, der mindestens eine offene Aufnahmekammer (4) definiert und eine Bodenwand (5) mit einer Mehrzahl von Durchgangsöffnungen (6) aufweist, und mindestens ein Stützelement (7), das mindestens einen Gehäusesitz (8) des Kastens (3) definiert, wobei der Gehäusesitz (8) mindestens eine Aussparung (9) aufweist, die zur Aufnahme einer biologischen Gewebeprobe bestimmt ist und im Gebrauch gegenüber der Bodenwand (5) angeordnet ist;
- mindestens eine Station zum Befüllen (14) der Aussparung (9), die mindestens eine Abgabevorrichtung (15) für flüssiges Paraffin umfasst;
**dadurch gekennzeichnet, dass** sie mindestens eine Station zum Fixieren (16) der biologischen Probe umfasst, die von der Station zum Befüllen (14) getrennt ist und mindestens eine Tropfvorrichtung (17) umfasst, die dazu ausgebildet ist, flüssiges Paraffin in Tropfenform in die Aussparung (9) abzugeben,
und dass die Abgabevorrichtung (15) einen Durchgangskanal (15a) für das flüssige Paraffin aufweist, der mit mindestens einer nach außen gerichteten Auslassöffnung (15b) versehen ist, und dass die Tropfvorrichtung (17) einen Tropfkanal (17a) für das flüssige Paraffin aufweist, der mit mindestens einer nach außen gerichteten Auslassöffnung (17b) versehen ist, wobei der Tropfkanal (17a) mit dem Durchgangskanal (15a) in Verbindung steht.

2. Ausrüstung (1) gemäß Anspruch 1, **dadurch gekennzeichnet, dass** die Station zum Fixieren (16) Mittel zum Kühlen des Stützelements (7) umfasst.

3. Ausrüstung (1) nach Anspruch 2, **dadurch gekennzeichnet, dass** die Station zum Fixieren (16) mindestens eine Fläche zum Aufliegen (20) des Stützelements (7) umfasst und dass die Mittel zum Kühlen der Fläche zum Aufliegen (20) zugeordnet sind.

4. Ausrüstung (1) nach einem oder mehreren der vorstehenden Ansprüche, **dadurch gekennzeichnet, dass** die Abgabevorrichtung (15) zwischen einer Ausgangsposition, in der sie von dem Kasten (3) beabstandet ist, und einer Abgabeposition, in der sie auf dem Kasten (3) aufliegt, wobei die Auslassöffnung (15b) der Aufnahmekammer (4) zugewandt ist, bewegbar ist.

5. Ausrüstung (1) nach Anspruch 4, **dadurch gekennzeichnet, dass** der Kasten (3) mindestens ein Anschlagelement (21) umfasst und dass die Abgabevorrichtung (15) mindestens ein Greifelement umfasst, das in der Abgabeposition mit dem Anschlagelement (21) in Eingriff kommen kann, um den Kasten (3) in Bezug auf die Abgabevorrichtung selbst zu zentrieren.

6. Ausrüstung (1) nach einem oder mehreren der vorstehenden Ansprüche, **dadurch gekennzeichnet, dass** die Station zum Befüllen (14) eine Mehrzahl von vordefinierten Aufnahmebereichen (22) umfasst, die dazu bestimmt sind, relevante Vorrichtungen (2) aufzunehmen, und Drehmittel zum Drehen der Aufnahmebereiche (22) um eine Achse (X), um die Aufnahmebereiche (22) nacheinander an der Auslassöffnung (15b) zu positionieren.

7. Ausrüstung (1) nach einem oder mehreren der vorstehenden Ansprüche, **dadurch gekennzeichnet, dass** sie mindestens eine Fläche zum Halten (18) der Vorrichtung (2) umfasst, die durch Verschieben entlang einer Vorwärtsbewegungsrichtung (19) bewegbar ist, wobei die Station zum Befüllen (14) stromabwärts von der Station zum Fixieren (16) entlang der Vorwärtsbewegungsrichtung (19) angeordnet ist.

8. Ausrüstung (1) nach einem oder mehreren der vorstehenden Ansprüche, **dadurch gekennzeichnet, dass** sie eine Konsolidierungsstation (23) für das von der Abgabevorrichtung (15) abgegebene Paraffin umfasst.

9. Ausrüstung (1) nach Anspruch 8, **dadurch gekennzeichnet, dass** die Konsolidierungsstation (23) mindestens eine Kammer zum Kühlen (24) der Vorrichtung (2) umfasst.

10. Ausrüstung (1) nach Anspruch 9, **dadurch gekennzeichnet, dass** die Kammer zum Kühlen (24) mindestens eine Öffnung zum Einlassen (24a) und eine Öffnung zum Herauslassen (24b) der Vorrichtung (2) umfasst, und dadurch, dass die Konsolidierungsstation (23) Mittel (25) zum Bewegen der Vorrichtung (2) von der Öffnung zum Einlassen (24a) zur Öffnung zum Herauslassen (24b) aufweist.

11. Ausrüstung (1) nach Anspruch 10, **dadurch gekennzeichnet, dass** die Konsolidierungsstation (23) in Vorwärtsbewegungsrichtung (19) hinter der Station zum Befüllen (14) angeordnet ist.

## Revendications

1. - Equipement (1) pour le traitement d'échantillons biologiques, comprenant :
- un dispositif de traitement (2) d'échantillons biologiques comprenant au moins une boîte (3) délimitant au moins une chambre de confinement ouverte (4) et ayant une paroi inférieure (5) comportant une pluralité d'ouvertures traversantes (6), et au moins un élément de support (7) délimitant au moins un siège de logement (8) de ladite boîte (3), ledit siège de logement (8) a au moins un évidement (9) destiné à recevoir un échantillon de tissu biologique et disposé, en cours d'utilisation, pour faire face à ladite paroi de fond (5) ;
- au moins une station de remplissage (14) dudit évidement (9) comprenant au moins un dispositif de distribution (15) de paraffine fluide ;
**caractérisé par le fait qu'**il comprend au moins une station de fixation (16) de l'échantillon biologique séparée de ladite station de remplissage (14) et comprenant au moins un dispositif de goutte-à-goutte (17) apte à libérer de la paraffine fluide sous forme de gouttelettes à l'intérieur dudit évidement (9)
et **par le fait que** ledit dispositif de distribution (15) comprend un canal de passage (15a) de la paraffine fluide comportant au moins un orifice de sortie (15b) tourné vers l'extérieur et **par le fait que** ledit dispositif de goutte-à-goutte (17) comprend un canal de goutte-à-goutte (17a) de la paraffine fluide comportant au moins un orifice de sortie (17b) tourné vers l'extérieur, ledit canal de goutte-à-goutte (17a) étant en communication avec ledit canal de passage (15a).

2. - Equipement (1) selon la revendication 1, **caractérisé par le fait que** ladite station de fixation (16) comporte des moyens de refroidissement dudit élément de support (7).

3. - Equipement (1) selon la revendication 2, **caractérisé par le fait que** ladite station de fixation (16) comprend au moins une surface d'appui (20) dudit élément de support (7) et **par le fait que** lesdits moyens de refroidissement sont associés à ladite surface d'appui (20).

4. - Equipement (1) selon l'une ou plusieurs des revendications précédentes, **caractérisé par le fait que** ledit dispositif de distribution (15) est mobile entre une position de repos, dans laquelle il est espacé de ladite boîte (3), et une position de distribution, dans laquelle il est placé en appui sur ladite boîte (3) avec ledit orifice de sortie (15b) tourné vers ladite chambre de confinement (4).

5. - Equipement (1) selon la revendication 4, **caractérisé par le fait que** ladite boîte (3) comprend au moins un élément de butée (21) et **par le fait que** ledit dispositif de distribution (15) comprend au moins un élément de saisie apte à s'engager avec ledit élément de butée (21) dans ladite position de distribution pour le centrage de ladite boîte (3) par rapport au dispositif de distribution lui-même.

6. - Equipement (1) selon l'une ou plusieurs des revendications précédentes, **caractérisé par le fait que** ladite station de remplissage (14) comprend une pluralité de zones de réception prédéfinies (22) destinées à recevoir des dispositifs de traitement appropriés (2), et des moyens de rotation pour faire tourner lesdites zones de réception (22) autour d'un axe (X) de façon à positionner lesdites zones de réception (22) successivement audit orifice de sortie (15b).

7. - Equipement (1) selon l'une ou plusieurs des revendications précédentes, **caractérisé par le fait qu'**il comprend au moins une surface de maintien (18) dudit dispositif de traitement (2) mobile par déplacement le long d'une direction vers l'avant (19), ladite station de remplissage (14) étant disposée en aval de ladite station de fixation (16) le long de ladite direction vers l'avant (19).

8. - Equipement (1) selon l'une ou plusieurs des revendications précédentes, **caractérisé par le fait qu'**il comprend une station de consolidation (23) de la paraffine distribuée par ledit dispositif de distribution (15).

9. - Equipement (1) selon la revendication 8, **caractérisé par le fait que** ladite station de consolidation (23) comprend au moins une chambre de refroidissement (24) dudit dispositif de traitement (2).

10. - Equipement (1) selon la revendication 9, **caractérisé par le fait que** ladite chambre de refroidissement (24) comprend au moins une ouverture d'entrée (24a) et une ouverture de sortie (24b) dudit dispositif de traitement (2), et **par le fait que** ladite station de consolidation (23) comprend des moyens de déplacement (25) dudit dispositif de traitement (2) de ladite ouverture d'entrée (24a) à ladite ouverture de sortie (24b).

11. - Equipement (1) selon la revendication 10, **caractérisé par le fait que** ladite station de consolidation (23) est disposée en aval de ladite station de remplissage (14) le long de ladite direction vers l'avant (19).
